# EUROPEAN PATENT SPECIFICATION

(11) **EP 2 216 153 B1**
(45) Date of publication and mention of the grant of the patent: **24.07.2013**
(21) Application number: 09152114.6
(22) Date of filing: 05.02.2009
(51) Int. Cl.: B29B 13/02, B29C 35/08

(54) **Melting apparatus for and method of liquefying a thermoplastic material**
Schmelzgerät und Verfahren zum Verflüssigen eines thermoplastischen Materials
Appareil de fusion et procéde pour liquéfier une matière thermoplastique

(43) Date of publication of application: 11.08.2010
(73) Proprietor: Nordson Corporation, Westlake, OH 44145-1119 (US)
(72) Inventor: Sasse, Dr. Joerg, 21365, Adendorf (DE); Bagung, Joerg-Olaf, 21407, Deutsch Evern (DE); Witthoeft, Mathias, 21397, Barendorf (DE); Reinke Klaus-Peter, 29574 Ebstorf (DE); Lübbecke Kai, 21357 Wittorf (DE)
(74) Representative: Eisenführ, Speiser & Partner

(56) References cited:
- WO-A-98/14314
- DE-A1- 1 955 598
- GB-A- 1 000 283
- US-A1- 2002 162 832

## Description

The present invention concerns a melting apparatus for the liquefaction of a thermoplastic material, in particular a hot melt adhesive, comprising a receiving unit for receiving the material to be liquefied and a heating device for heating the material received by the receiving unit so that it can be liquefied. The invention further concerns a method of liquefying thermoplastic material, in particular hot melt adhesive.

Melting apparatuses and methods of that kind for the liquefication, that is to say melting, of thermoplastic material such as hot melt adhesive (hotmelt) are used in various, in particular industrial applications. In that case the material to be liquefied is provided in solid form, for example in the form of pellets or in a block in a drum or the like and liquefied by means of the melting apparatus. The liquefied material which is thus capable of flow can then be transported away from the melting apparatus, optionally by means of a pump, through a hose or another conduit, and transported to a consumer, for example an applicator apparatus for dispensing and applying the material to a substrate. The applicator apparatus can involve an applicator head with a slot nozzle for application over an area, or an apparatus for applying one or more beads or a spray applicator apparatus or a hand gun. Depending on the respective requirements involved the material is liquefied by means of the heating device, in a given amount. For example drum-type melting apparatuses or those with a tank for receiving pellets are known.

Different heating devices for heating and melting the material are used in the state of the art. In the case of drum-type melting apparatuses an electrically heated ram comes directly into contact with the material to be liquefied. Such an apparatus is known for example from US No 6 046 437 to the applicants Nordson.

US No 6 230 936 A discloses a melting apparatus in which an electrical current and heat are generated by means of an electrical coil in a metallic heating element. The heating element which is directly in communication with the material (adhesive) to be liquefied heats and liquefies the material. The heat is transmitted to the material by heat conduction in the metallic heating element.

A drum-type melting apparatus for liquefying material in a drum is known from Meltex-Verbindungs-Technik GmbH, in which the outside wall and the bottom of the drum which is filled with material is heated by infrared radiation which impinges from the exterior on the outside wall of the drum. The infrared radiation heats the wall of the drum and heat passes by heat conduction in the wall to the material in the interior of the drum, the material being liquefied by virtue of the heat conduction.

GB-1 000 283 A discloses an apparatus according to the preamble of claim 1 and a method according to the preamble of claim 17.

A disadvantage of the melting apparatuses known from the state of the art can be seen in the fact that the melting operation is subject to an inertia, meaning that the metallic heating elements which are directly in contact with the material to be liquefied heat the material by means of heat conduction and themselves have to be heated if material which is capable of flow is required. Therefore, heating of the heating elements themselves requires a certain amount of heat which, as mentioned above, is produced by means of a coil, by means of electrical resistance heating wires or by means of external infrared radiation impinging on a drum.

The problem of the present invention is to provide a melting apparatus for and a method of liquefying a thermoplastic material, in particular a hot melt adhesive, which avoids or reduces the disadvantages of the known apparatuses. In particular the invention seeks to provide that, with a low level of inertia, liquid adhesive is rapidly produced and with a drop in the need for adhesive, a flow of adhesive rapidly ceases. In particular the invention also seeks to provide that sensitive and/or reactive adhesives or other materials can be liquefied and processed as carefully and gently as possible, in particular also in such a way that the materials are not subjected to prolonged thermal stresses.

The invention solves that problem with the features of the characterising portions of claims 1 and 17.

The advantages of the invention are that the energy required for melting the material, that is to say liquefying it, can be introduced in a highly targeted and direct fashion by virtue of direct impingement of the electromagnetic radiation on the initially solid material to be liquefied, and in that way the material can be very rapidly melted without major delays. The melting apparatus according to the invention or the method thus have a lower level of inertia in respect of time in relation to the melting procedure than is the case with the melting apparatuses which are known from the state of the art and which have a higher level of inertia by virtue of the metallic melting elements which are used and which come into contact with the material and which themselves have to be heated and which by virtue of their mass and the required heat conduction through the mass suffer from greater inertia, that is to say they cool down or are heated more slowly, and have a lower level of energy efficiency. In accordance with the invention the electromagnetic radiation and thus radiation energy impinges directly on the material, for example a hot melt adhesive, and liquefies same.

A further advantage derives from the fact that the radiation energy to be introduced can be metered and adjusted by selecting the radiation intensity and/or wavelength in specifically targeted fashion. In that way it is possible in particular for sensitive materials, for example reactive and/or sensitive adhesives, to be also carefully and gently processed and melted. By virtue of the above-described low level of inertia of the melting apparatus according to the invention, it is also possible to reduce the thermal stress in respect of time, in contrast to the systems in the state of the art, with their greater inertia.

The emitting electromagnetic radiation given off by the radiation source can impinge in accordance with the invention directly on the material to be liquefied, which can signify that no further components are disposed between the radiation source and the material or that a radiation-transmitting material, for example a glass disc or a reflector such as a mirror, is disposed in the radiation beam path.

A preferred embodiment provides that a radiation-transmitting separating element is arranged between the radiation source and the receiving unit in the beam path of the electromagnetic radiation. A development proposes that the radiation source and/or the separating element are so arranged that the electromagnetic radiation given off by the radiation source is radiated directly through the separating element and impinges on the material to be liquefied. By means of an interposed separating element which is advantageously in the form of a disc, in particular a glass ceramic disc, it is possible to provide that the radiation source is arranged protected in relation to gases, vapours, particles or the like, which can be formed during the melting operation and which could be deposited on the radiation source or adversely affect it in some other fashion. A separating element is also appropriate or required when the melting process is to take place in as gas-tight fashion as possible and the aim is to prevent moisture, for example moisture in the air, from reaching the material to be melted or the liquefied material. That can be particularly advantageous when a high level of purity of the material to be liquefied, for example an adhesive, has to be achieved and/or changes in the material due to moisture or gases have to be prevented.

A further preferred embodiment is distinguished in that the radiation source, the separating element and the receiving unit are arranged along a longitudinal axis of the melting apparatus, wherein the longitudinal axis in operation is preferably not vertically arranged and particularly preferably is arranged substantially horizontally or inclinedly with respect to a horizontal line. The arrangement along a longitudinal axis provides on the one hand a relatively short beam path and a compact structure and on the other hand a simple arrangement. By virtue of the inclined arrangement, the liquefied material can be particularly easily collected in a collecting portion of the apparatus and drained away from that collecting portion and passed for further transport.

The required amount of radiation to be introduced and the required quantitative flows of material to be liquefied can advantageously be achieved by a plurality of radiation sources being arranged in a radiation unit. The radiation unit with the plurality of radiation sources is preferably a compact structural unit which can be easily fitted to and removed from the melting apparatus.

A further preferred embodiment is distinguished in that the radiation source or sources is/are adapted to give off radiation of a wavelength in the range of between 10⁻⁷ and 10⁻³ m, in particular to give off infrared radiation in the range of between 10⁻⁷ and 10⁻³ m. Those wavelength ranges permit an advantageous input of energy, with at the same time a high level of operational reliability.

In accordance with a development of the invention it is proposed that the receiving unit has a housing which at least at a side in opposite relationship to the radiation source has an opening through which the electromagnetic radiation can penetrate and/or through which the material to be liquefied extends and/or the housing of the receiving unit has substantially a cylindrical or parallelepipedic peripheral wall. That affords a compact, simple design configuration.

According to the invention the receiving unit has an advance device for advancing the material to be liquefied in a direction towards the radiation source. Depending on the respective requirement involved the material can be successively pushed along in the direction of the radiation source by the advance device, in dependence on the consumption. The melting procedure therefore takes place under conditions which remain the same and the material is always melted at a location which remains substantially the same, within the melting apparatus, so that molten material can be particularly easily collected and drained off directly over the shortest possible path, which further reduces the inertia involved when preparing the liquid material and reduces the energy demand.

The advance device has a pneumatically, hydraulically or motor-driven reciprocatable ram or a prestressable spring. It is further advantageous if the ram is linearly displaceable within the housing of the receiving unit and the ram is drivable by means of a rod and a pneumatic cylinder.

In accordance with a further aspect of the invention or an alternative preferred configuration it is provided that the receiving unit is so adapted that the received material to be liquefied is rotatable. Such a rotatable arrangement makes it possible to provide for a rapid interruption in the flow of the material insofar as, whenever the radiation source of the radiation unit is switched off, the material is rotated so that material which is possibly still capable of flow, by virtue of the rotation, flows along the block without dripping from same. That rotatable arrangement can advantageously be achieved in that the housing of the receiving unit can be rotatably supported and can be rotated by means of a drive device, in particular by means of a pneumatic cylinder. In addition a particularly simple configuration is afforded if the axis of rotation of the housing coincides with the longitudinal axis of the melting apparatus and the ram of the pneumatic cylinder engages substantially in the tangential direction the substantially cylindrical housing of the receiving unit for the rotary movement.

In accordance with a development of the invention it is proposed that there is a collecting device for collecting and/or carrying away the liquefied material. Such a collecting device can either be provided within a housing of the melting apparatus or also outside in the form of a collecting device which is disposed downstream in the flow direction. Collection of a given amount of molten material can be appropriate as a buffer in order to be able to meet peaks in demand. In particular a more preferably heatable hose or a heatable conduit can be used for carrying away the liquefied material.

A further alternative embodiment is distinguished by a working chamber which is defined on the one hand by the separating element and on the other hand by the receiving unit and a housing portion and which in operation partially has electromagnetic radiation passing therethrough and has an outlet opening through which the liquefied material can be carried away. It is preferred that the working chamber is of a substantially gas-tightly sealed nature and the ram of the advance device is in sealed relationship within the housing of the receiving unit, preferably by means of a sealing lip, in order to minimise influences of the environment and on the environment.

It has proven desirable if the longitudinal axis of the melting apparatus in operation is arranged inclinedly preferably at an angle of up to 45° with respect to a horizontal and the opening of the working chamber is arranged approximately at the lowest point.

The invention is described hereinafter by means of a preferred embodiment by way of example with reference to the drawings in which:
- Figure 1: shows a perspective view of a melting apparatus according to the invention,
- Figure 2: shows the melting apparatus of Figure 1 with a portion in a pivoted-away posi- tion,
- Figure 3: shows a side view of the melting apparatus of Figure 1,
- Figure 4: shows the melting apparatus of Figure 1 in a sectional view in a first operating condition,
- Figure 5: shows the melting apparatus of Figure 1 in a sectional view in a second operat- ing condition,
- Figure 6: shows the melting apparatus of Figure 1 in a sectional view in a third operating condition, and
- Figure 7: shows a partly sectional view of an alternative embodiment of a melting appara- tus according to the invention.

The melting apparatus 1 shown in the Figures is an apparatus for the liquefaction of a thermoplastic material such as in particular adhesive, in particular hot melt adhesive, but other liquefiable materials such as for example sealing materials could also be processed and prepared therewith.

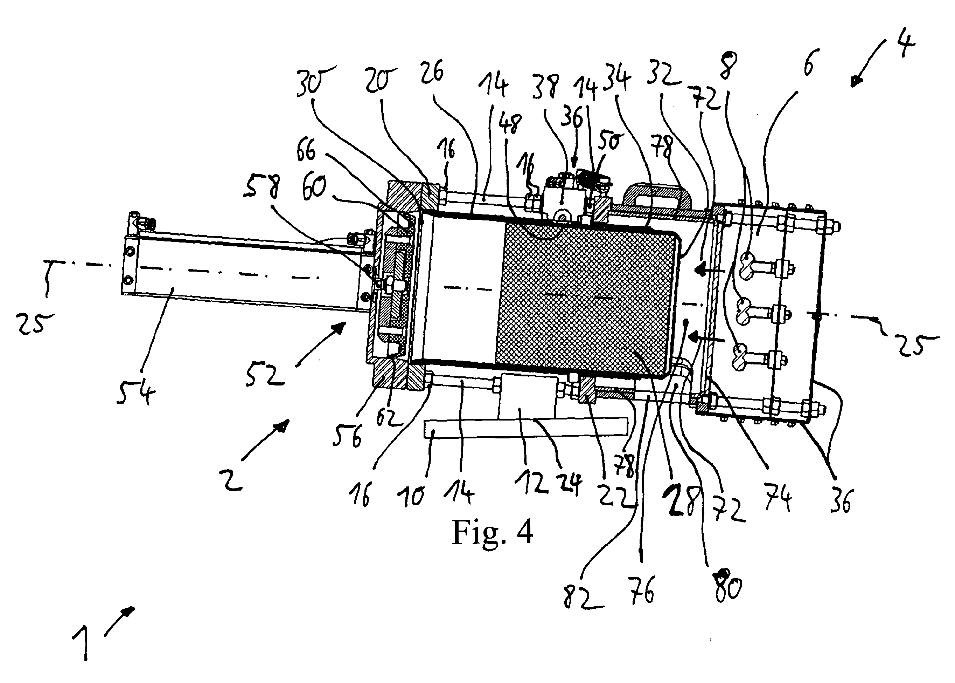

The melting apparatus has a receiving unit 2 for receiving the material to be liquefied and a heating device 4 for heating the material received by the receiving unit 2. The heating device is in the form of a radiation unit 6 with a plurality of radiation sources 8 (Figures 4 to 6), which are adapted to give off electromagnetic radiation, as is described in greater detail hereinafter.

The melting apparatus 1 can be set down on a square base plate 10 or mounted to a frame structure or the like. The receiving unit 2 and the radiation unit 6 are connected to the base plate 10 by means of mounting blocks 12, mounting rods 14, nuts 16 and holding plates 20 and 22. The fact that the mounting blocks 12 are not parallelepipedic but a lower surface 24 (Figure 4) extends inclinedly and is bevelled means that the melting apparatus 1 can be so arranged that its longitudinal axis 25 in operation extends inclinedly at an angle of approximately up to 45° with respect to a horizontal. In the illustrated embodiment the angle is about 5°.

The receiving unit 2 has a housing 26 which is mounted to the mounting plates 20, 22 preferably rotatably about the longitudinal axis 25 and which is rotationally symmetrical and cylindrical. It serves to receive the material to be melted which is in the form of a cylindrical block 28. The tolerances are so selected that the block 28 does not drop out of the housing 26, in spite of the inclination of the longitudinal axis 25. Alternatively the housing 26 could also be of different shapes, for example a parallelepipedic shape or the like. Preferably the housing 26 is made of a metal. It has two oppositely disposed substantially circular openings 30, 32 and is delimited by its peripheral wall 34. In a manner not shown, the receiving unit 2 could also have other holding means for holding the material to be liquefied. The housing 26 is secured in the axial direction, for example by a securing ring, a groove or the like, but at the same time is rotatable about the longitudinal axis 25. For that purpose the housing 26 is supported by a plain bearing means between the holding plates 20, 22 and the outer surface of the peripheral wall 34. Alternatively it would also be possible to use rolling bearings.

A drive device 36 serves for rotating the housing 26 and is mounted to the rods 14. It has a pneumatic cylinder 40 which is supported by means of a block 38 pivotably about the longitudinal axis of the rods 14 and the piston rod 42 of which is connected to a conically tapering thrust member 44 whose end portion 46 which in the end region firstly enlarges conically and is then cylindrical co-operates with the peripheral wall 34 of the housing 26. For that purpose provided in the peripheral wall 34 are a plurality of equally spaced depressions 48 which can be in the form of recesses or through bores or milled openings and which are so shaped that the end portion 46 can engage or extend into a respective depression 48 for transmitting a torque. To rotate the housing 26 and therewith the block 28 the pneumatic cylinder 40 is actuated by means of a control device (not shown in detail) of the melting apparatus 1. By virtue of the pivotable arrangement of the pneumatic cylinder 40 and therewith also the thrust member 44, it can come into and out of engagement with the depressions 48. A coil spring 50 which is fixed to the mounting plate 22 with one end and to the block 38 of the drive device 36 with its other end and which is subjected to a tensile stress applies a torque in such a way that the thrust member 44 is biased in a direction towards the peripheral wall 34. Alternatively other drive mechanisms for rotating the housing 26 are conceivable, for example a gear/pinion drive or a drive by means of a friction wheel, a worm drive or others. The axis of rotation 25 of the housing 26 coincides with the longitudinal axis 25 of the melting apparatus and the ram or thrust member 44 of the pneumatic cylinder 40 engages substantially in the tangential direction on the substantially cylindrical housing 26 of the receiving unit 2 for the rotary movement.

The melting apparatus 1 further has an advance device 52 for displacing the material to be liquefied, in the illustrated embodiment the block 28, in a direction towards the radiation source or sources 8. In the illustrated embodiment the advance movement is effected linearly along the longitudinal axis 25 by means of a drive in the form of a pneumatic cylinder 54. Other drives could also be used. The pneumatic cylinder 54 which is fixed to a cover 56 screwed to the holding plate 20 has a rod 58 which at its end is releasably connected to a substantially cylindrical ram 60 so that the ram 60 is reciprocatable between a retracted position shown in Figure 4 in which the ram is arranged completely within the cover 56 and outside the housing 26 and a limit position shown at the right in Figures 4 to 6, in which the ram 60 is positioned within the housing 26. The material to be liquefied (block 28) can be displaced in a direction towards the radiation source 8 by means of the advance device 52 in such a way that the spacing of the radiation source 8 from the oppositely disposed end face of the material remains substantially the same during the melting operation by means of the electromagnetic radiation given off by the radiation source 8. The melting apparatus can be designed in such a way that the ram 60 can be advanced at a maximum as far as the opening 32 of the housing 26.

The ram 60 is so dimensioned that it is arranged in sealing relationship within the housing 26 of the receiving unit 2. For that purpose a sealing lip 62 can optionally be provided on the ram 60. The ram 60 can be of a one-part or multi-part structure. In the illustrated embodiment it has a cylindrical metal plate 64 and a ram element 66 comprising plastic material and having the sealing lip 62.

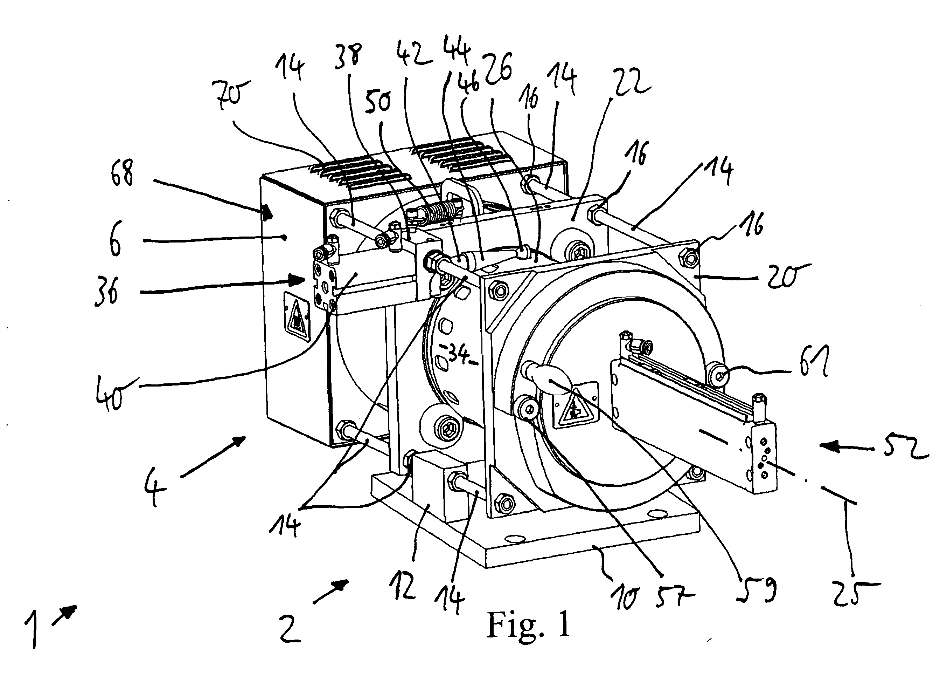

The radiation unit 6 has a substantially parallelepipedic housing 80 which is screwed by means of four rods 14 to the holding plate 22 and thus the receiving unit 4, and forms an apparatus unit. The housing 68 has a plurality of venting slots 70 (Figure 1) through which heat can be discharged. Depending on the respective energy demand, a given number of radiation sources 8 is arranged in the radiation unit 6 so that electromagnetic radiation is emitted in a direction towards the material to be liquefied, which is received by the receiving device 2, and impinges on the material to be liquefied. In the illustrated embodiment the electromagnetic radiation (Figure 4) is indicated by arrows 72. The radiation passes in substantially parallel relationship with the longitudinal axis 25. It passes through a radiation-transmitting separating element 74 (Figure 4) which is in the form of a disc of glass, for example a glass ceramic disc, and is of a substantially cylindrical shape. The control device of the melting apparatus 1 also controls the radiation unit 6, in particular its power, radiation intensity, possibly wavelength and the like. The radiation source or sources 8 are adapted to give off radiation at a wavelength in the range of between 10⁻⁷ and 10⁻³ m, in particular to give off infrared radiation in the range of between 10⁻⁷ and 10⁻³.

The radiation 72 impinges on the material to be melted, in the illustrated embodiment by virtue of passing through the opening 32 and impinging on the end surface of the block 28. The radiation energy gives rise to heat which in the material directly leads to the material being melted to liquefy it. In a manner not shown here it can be provided that the radiation is deflected by means of one or more mirrors in its beam path, or is refracted or focused by means of lenses.

A working chamber 76 is provided in the melting apparatus 1, which is defined by the radiation-transmitting separating element 74 on the one hand, and on the other hand by the block 28 of meltable material and a portion of the receiving unit 2, in particular the housing 26, more precisely its peripheral wall 24 and a housing portion 78. The preferably infrared radiation passes in part through the working chamber 76. The liquefied material and any gases are enclosed in the working chamber 76 which is of a substantially gas-tight nature.

Bores, apertures or openings can be provided in particular at the top side of the housing portion 78 in order to be able to discharge heat from the working chamber 76.

Molten material will flow under the effect of the force of gravity in a direction towards a lower region of the working chamber 76 and collect therein, which can also be referred to as the collecting region 80. The molten material can flow out of the working chamber 76 through an outlet opening 82 which is arranged in the lower region adjacent to the collecting region 80 and which is provided in the housing portion 78, and can be carried away through a conduit connecting to the opening 82 or a preferably heated tube and conveyed away for further processing, optionally by means of a pump. A collecting device in the form of a preferably heated container can follow the opening 82 in the flow direction in a manner not shown here to form a buffer for molten material.

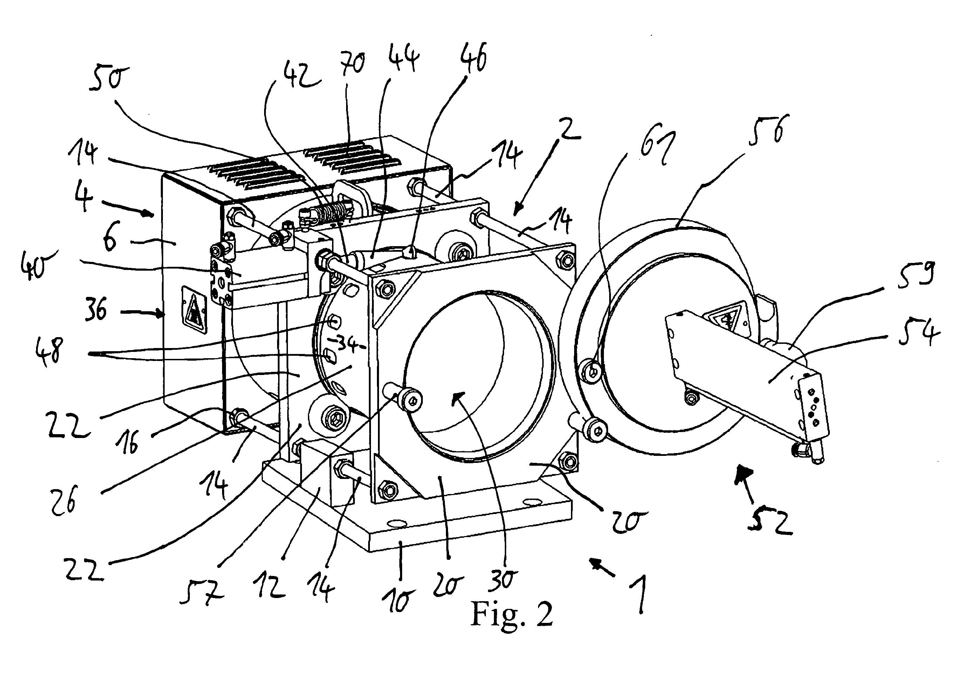

As can be seen from Figure 2 the cover 56 is pivotable from the Figure 1 position into the Figure 2 position about an axis of rotation defined by the screw 61, when the ram 60 is completely retracted into the cover 56, by means of a handle 59, so that access is afforded to the interior of the housing 26 and fresh material to be melted (block 28) can be inserted into the receiving device 2.

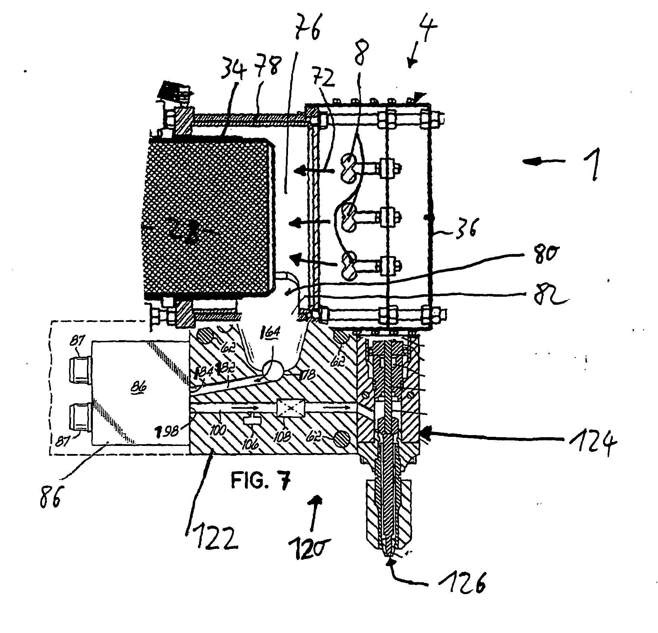

The alternative embodiment of the invention shown in Figure 7 illustrates a melting apparatus 1 according to the invention in the upper part of the view, which forms a compact unit together with a pump 86 and a drain device 120. The melting apparatus 1 is substantially of the configuration of the embodiment described with reference to the preceding Figures, but it is so adapted that the drain device 120 is connected to the melting apparatus 1 by the parts being mechanically connected together. In this case the base plate 10 (Figure 1) is omitted and the mounting blocks 12 are omitted or are so adapted that a connection is made to the drain device 120. The drain device 120 has a distributor 122 which is preferably in the form of a heatable metallic block mechanically connected to the melting apparatus 1. In addition, secured to the distributor 122 is a drain module 124 which receives liquid material and drains it away through a drain opening 126. The module 124 is equipped with a conventional valve to selectively enable or interrupt the flow of the material through the drain opening 126. The drain device 120, in particular the distributor 122, the pump 86 and the module 124 are in principle of such a configuration as is described in the international patent application bearing the publication No WO 2007/084891 to the applicants Nordson Corporation. Reference is made to the description of that application, in particular the description at paragraphs 0033 to 0062 on pages 7 to 16.

The distributor 122 is so arranged and fixed to the melting apparatus 1 that a hollow space 164 in the block communicates with the outlet opening 82 (see also Figure 4) so that material which is melted in operation and which is capable of flow can flow out of the lower collecting region 80 of the working chamber 76 of the melting apparatus 1 into the hollow space 164, wherein the working chamber 76 and the hollow space 164 are sealed off relative to each other so that no liquid material can issue. Material can flow through a collecting passage 178 into a pump feed passage 182 to an inlet 184 of the pump 86 which is drivable by a motor in a manner not shown here. Liquefied material can further be conveyed through the pump outlet 198 through the passage 100 to the drain module 124. The entire unit which substantially includes the melting apparatus 1, the pump 86, the distributor 122 and the module 124 can be fixed for an industrial application for example to support frame structures, a robot arm or a frame structure displaceable by means of rollers so that the outlet opening 126 of the drain device 120 can be positioned in the desired manner relative to a substrate to which liquid material is to be applied. All components are coupled to a control system to be able to actuate them in regard to the application.

The method according to the invention of liquefying meltable material and the mode of operation of the melting apparatus 1 are described hereinafter with reference to the Figures:

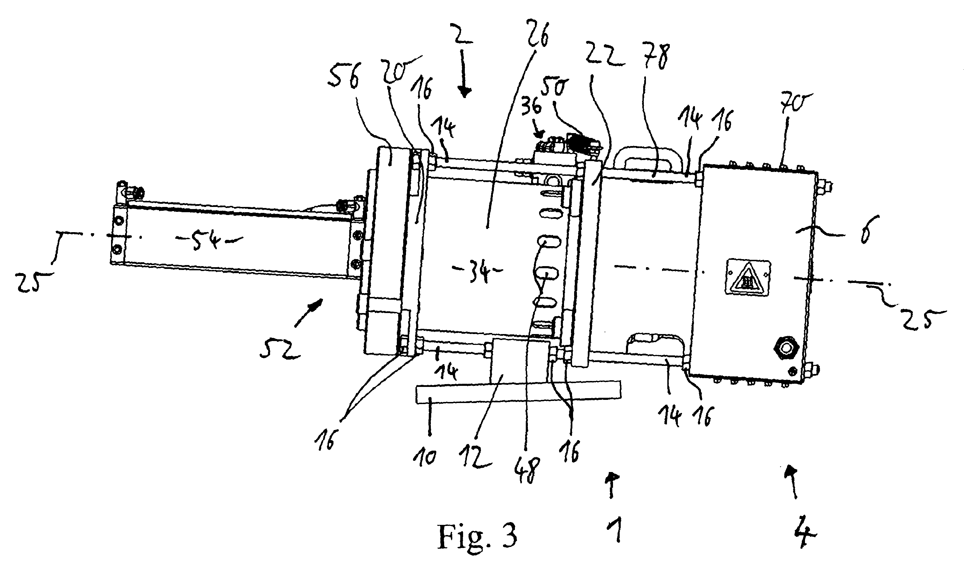

With the cover 56 opened and pivoted away (Figure 2) meltable material, preferably in the form of a block 28, is introduced into the interior of the housing 26 of the receiving device 2 so that the condition shown in Figure 4 is attained. The cover 56 is then pivoted back into the position shown in Figures 1 or 3 to 6. All components are switched into a condition of readiness for operation by means of the control device.

When there is a demand for liquid material the radiation unit 4 is actuated in such a way that the radiation sources 8 emit the electromagnetic radiation of the desired intensity so that the radiation, possibly after deflection or after passing through the separating element 74, impinges directly on the material to be melted. Material is melted in particular in the region of the end opposite to the radiation source 8 and regions near the surface, by the energy of the incident, preferably infrared radiation. The molten material flows and/or drips within the working chamber 76 downwardly towards the collecting region 80. Liquid material can be discharged from the melting apparatus within the downstream-connected lines through the opening 82 for further processing, for example by a roller applicator apparatus, an applicator head, a gun delivery device or the like.

During the melting operation, when the radiation unit 4 is switched on, the advance device 52 is switched on to push the material forward by means of the ram 60 in a direction towards the radiation sources 8. That can happen in such a way that the spacing of the end face of the material relative to the radiation sources 8 remains substantially the same.

The block 28 together with the housing 26 is rotated about the longitudinal axis 25 by means of the drive device 36 which is switched on when the radiation sources 8 of the radiation unit 4 are switched off so that the flow of material is rapidly interrupted.

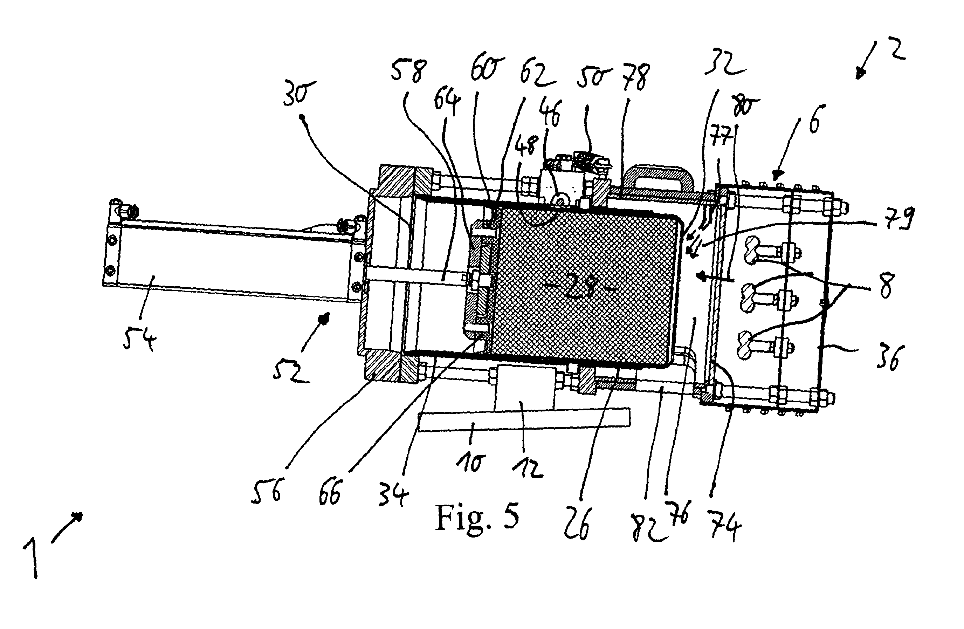

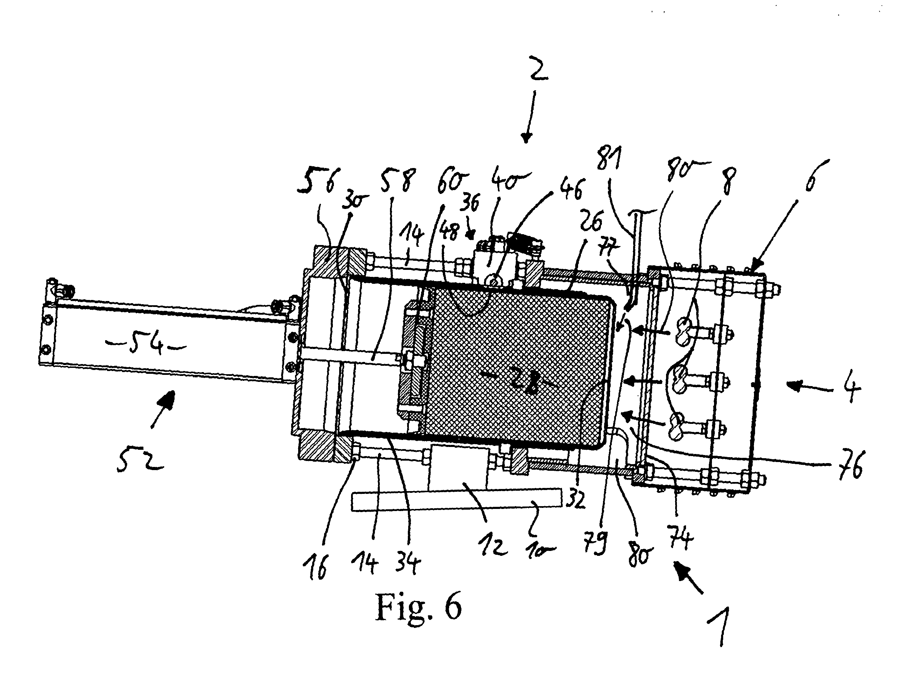

In addition the melting apparatus can be provided with a cooling device shown in Figures 5 and 6 for cooling the side of the block 28, that is opposite to the radiation sources 8. The cooling device can have for example an air nozzle 77 or a plurality of air nozzles 77 which are so positioned in the working chamber 76 or at the edge of the working chamber 76 that a gas flow 79, in particular an air flow, is passed out of the outlet opening or openings of the nozzles towards the surface of the block 28, that is opposite to the radiation sources 8. An air flow or a plurality of air flows would be switched on whenever the radiation sources 8 are switched off so that the air flow provides for cooling of the material of the block 28 and thus rapid solidification of the material. That affords a rapid interruption in a flow of material. The air nozzles 77 are connected to a compressed air source or the like by means of a conduit 81 (Figure 6) or conduits. The air flow can be switched on and off by means of a valve, by means of the control device.

If no molten material is required the radiation source is switched off or its output power reduced so that less radiation energy impinges directly on the material so that the melting operation is reduced or completely interrupted. If additional molten material is required the radiation unit 4 can be so set again that the intensity of the radiation is increased so that the melting operation takes place afresh.

When the block 28 is completely or substantially melted away the ram 60 is moved into the position shown in Figure 4. The cover 56 is opened again (Figure 2) and a new bundle or block 26 of meltable material can be introduced. Operation can then be resumed.

In the apparatus shown in Figure 7 molten material melted in the melting apparatus 1 flows through the outlet opening 82 into the hollow space 164 and the passage 182 to the pump 86 and from there is conveyed through a pump outlet 198 through the passage 100 into the drain module 124 and when the valve is opened is discharged through the drain opening 126 on to a substrate.

By means of the electromagnetic radiation given off by the radiation sources 8, in particular infrared radiation, a very great deal of energy can be provided for the melting operation in a very short time and can be introduced directly into the material to be melted. The radiation sources 8 can also switch or reduce the radiation energy rapidly, in which case little residual energy remains in the component parts of the melting apparatus so that the melting operation can be quickly interrupted. In that way adhesive can be melted in a short time with a low level of inertia and a melting operation can be interrupted in a short time.

## Claims

1. A melting apparatus for the liquefaction of a thermoplastic material comprising
a receiving unit (2) for receiving the material to be liquefied,
a heating device (4) for heating the material received by the receiving unit (2) so that it can be liquefied,
wherein the heating device (4) has at least one radiation source (8) for giving off electromagnetic radiation, which is of such an arrangement and configuration that electromagnetic radiation can impinge on the material to be liquefied in order to liquefy it,
**characterised in that** the receiving unit (2) has an advance device (52) for advancing the material to be liquefied in a direction towards the radiation source (8), wherein the advance device (52) has a pneumatically, hydraulically or motor-driven reciprocatable ram (60) or a prestressable spring.

2. A melting apparatus as set forth in claim 1 **characterised in that** a radiation-transmitting separating element (74) is arranged between the radiation source and the receiving unit in the beam path of the electromagnetic radiation, wherein the radiation source (8) and/or the separating element (74) are so arranged that the electromagnetic radiation given off by the radiation source (8) is radiated directly through the separating element (74) and Impinges on the material to be liquefied.

3. A melting apparatus as set forth in claim 2 **characterised in that** the radiation source (8), the separating element (74) and the receiving unit (2) are arranged along a longitudinal axis (33) of the melting apparatus, wherein the longitudinal axis (25) in operation is not vertically arranged.

4. A melting apparatus as set forth in one of the preceding claims **characterised in that** a plurality of radiation sources (5) are arranged in a radiation unit (6).

5. A melting apparatus as set forth in one of the preceding claims **characterised in that** the radiation source or sources (8) is/are adapted to give off radiation of a wavelength in the range of between 10⁻⁷ and 10⁻³ m.

6. A melting apparatus as set forth in one of claims 2 to 5 **characterised in that** the separating element (74) is in the form of a disc.

7. A melting apparatus as set forth in at least one of the preceding claims **characterised in that** the receiving unit (2) has a housing (26) which at least at a side in opposite relationship to the radiation source (8) has an opening (32) through which the electromagnetic radiation can penetrate and/or through which the material to be liquefied extends.

8. A melting apparatus as set forth in claims 7 **characterised in that** the housing (26) of the receiving unit (2) has substantially a cylindrical or parallelepipedic peripheral wall (34).

9. A melting apparatus as set forth in at least one of the claims 7 or 8 characterized terised in that the ram (60) is linearly displaceable within the housing (26) of the receiving unit (2) and the ram (60) is drivable by means of a rod (58) and a pneumatic cylinder (54).

10. A melting apparatus as set forth in at least one of the claims 7 to 9 **characterised in that** the receiving unit (2) is so adapted that the received material to be liquefied is rotatable.

11. A melting apparatus as set forth in claim 10 **characterised in that** the housing (26) of the receiving unit (2) is rotatably supported and can be rotated by means of a drive device (36), in particular by means of a pneumatic cylinder (40).

12. A melting apparatus as set forth in claim 11 **characterised in that** the axis of rotation (25) of the housing (26) coincides with the longitudinal axis (25) of the melting apparatus and the ram of the pneumatic cylinder engages substantially in the tangential direction the substantially cylindrical housing (26) of the receiving unit (2).

13. A melting apparatus as set forth in at least one of the preceding claims **characterised by** a collecting device for collecting and/or carrying away the liquefied material, wherein preferably the melting apparatus is connected to a pump (76) and a drain device (120) for draining off liquid material.

14. A melting apparatus as set forth in at least one of the preceding claims **characterised by** a working chamber (76) which is defined on the one hand by the separating element (74) and on the other hand by the receiving unit (2) and a housing portion (78) and which in operation partially has electromagnetic radiation passing therethrough and has an outlet opening (82) through which the liquefied material can be carried away.

15. A melting apparatus as set forth in claim 14 **characterised in that** the working chamber (76) is of a gas-tightly sealed nature and the ram (60) of the advance device Is in sealed relationship within the housing (26) of the receiving unit.

16. A melting apparatus as set forth in one of the preceding claims **characterised in that** the longitudinal axis of the melting apparatus in operation is arranged Inclinedly at an angle of up to 45° with respect to a horizontal and the opening of the working chamber is arranged at the lowest point.

17. A method of liquefying thermoplastic material In particular using a melting apparatus as set forth in at least one of the preceding claims,
wherein material to be liquefied which is received in a receiving unit is liquefied by means of a heating device,
and the fiquefied material Is collected and/or carried away,
wherein
a radiation source gives off electromagnetic radiation,
the electromagnetic radiation impinges on the material to be liquefied in the receiving unit.
the material is liquefied by the impinging electromagnetic radiation, and
the liquid material is collected and/or carried away
**characterised in that** the material to be liquefied is advanced by means of an advance device (52) in a direction towards the radiation source (8), wherein the advance device (52) has a pneumatically, hydraulically or motor-driven reciprocatable ram (60) or a prestressable spring.

18. A method as set forth In claim 17 **characterised in that** the electromagnetic radiation is given off by a plurality of radiation sources, passes through a radiation-transmitting separating element and then impinges on the material to be liquefied which is at least partially arranged in a working chamber.

## Patentansprüche

1. Schmelzvorrichtung zum Verflüssigen eines thermoplastischen Materials umfassend:
eine Aufnahmeeinheit (2) zum Aufnehmen des zu verflüssigenden Materials,
ein Heizgerät (4) zum Aufheizen des durch die Aufnahmeeinheit (2) aufgenommenen Materials, so dass es verflüssigt werden kann,
wobei das Heizgerät (4) wenigstens eine Strahlungsquelle (8) zum Abgeben elektromagnetischer Strahlung aufweist, welche so eingerichtet und konfiguriert ist, dass die elektromagnetische Strahlung auf das zu verflüssigende Material einwirken kann, um es zu verflüssigen,
**dadurch gekennzeichnet, dass** die Aufnahmeeinheit (2) eine Vorschubeinrichtung (52) zum Vorschieben des zu verflüssigenden Materiales in Richtung der Strahlungsquelle (8) aufweist, wobei die Vorschubeinrichtung (52) einen pneumatisch, hydraulisch oder motorbetrieben hin und her bewegbaren Kolben (60) oder eine vorspannbare Feder aufweist.

2. Schmelzvorrichtung nach Anspruch 1,
**dadurch gekennzeichnet, dass** ein strahlungsdurchlässiges Abtrennelement (74) zwischen der Strahlungsquelle und der Aufnahmeeinheit im Strahlungsweg der elektromagnetischen Strahlung angeordnet ist, wobei die Strahlungsquelle (8) und/oder das Abtrennelement (74) so angeordnet sind, dass die elektromagnetische Strahlung, welche durch die Strahlungsquelle (8) ausgegeben ist, direkt durch das Abtrennelement (74) hindurchstrahlt und auf das zu verflüssigende Material einwirkt.

3. Schmelzvorrichtung nach Anspruch 2,
**dadurch gekennzeichnet, dass** die Strahlungsquelle (8), das Abtrennelement (47) und die Aufnahmeeinheit (2) entlang einer Längsachse (33) der Schmelzvorrichtung angeordnet sind, wobei die Längsachse (25) im Betrieb nicht vertikal ausgerichtet ist.

4. Schmelzvorrichtung nach einem der vorstehenden Ansprüche,
**dadurch gekennzeichnet, dass** eine Vielzahl von Strahlungsquellen (5) in einer Strahlungseinheit (6) angeordnet sind.

5. Schmelzvorrichtung nach einem der vorstehenden Ansprüche,
**dadurch gekennzeichnet, dass** die Strahlungsquelle oder -quellen (8) zur Abgabe einer Strahlung mit einer Wellenlänge im Bereich zwischen 10⁻⁹ und 10⁻³ m eingerichtet ist/sind.

6. Schmelzvorrichtung nach einem der Ansprüche 2 bis 5,
**dadurch gekennzeichnet, dass** das Abtrennelement (74) die Form einer Scheibe aufweist.

7. Schmelzvorrichtung nach einem der vorstehenden Ansprüche,
**dadurch gekennzeichnet, dass** die Aufnahmeeinheit (2) ein Gehäuse (26) aufweist, welches wenigstens auf einer Seite in umgekehrter Beziehung zur Strahlungsquelle (8) eine Öffnung aufweist, durch welche die elektromagnetische Strahlung durchtreten kann und/oder durch welche sich das zu verflüssigende Material erstreckt.

8. Schmelzvorrichtung nach Anspruch 7,
**dadurch gekennzeichnet, dass** das Gehäuse (26) der Aufnahmeeinheit (2) eine im Wesentlichen zylindrische oder parallelepipedische Außenwand (34) aufweist.

9. Schmelzvorrichtung nach einem der Ansprüche 7 und 8,
**dadurch gekennzeichnet, dass** der Kolben (60) innerhalb des Gehäuses (26) der Aufnahmeeinheit (2) linear verstellbar ist und der Kolben (60) mittels einer Kolbenstange (58) und einem Pneumatikzylinder (54) antreibbar ist.

10. Schmelzvorrichtung nach einem der Ansprüche 7 bis 9,
**dadurch gekennzeichnet, dass** die Aufnahmeeinheit (2) so eingerichtet ist, dass das aufgenommene, zu verflüssigende Material drehbar ist.

11. Schmelzvorrichtung nach Anspruch 10,
**dadurch gekennzeichnet, dass** das Gehäuse (26) der Aufnahmeeinheit (2) drehbar gelagert ist und mittels einer Antriebseinrichtung (36) drehbar ist, insbesondere mittels eines Pneumatikzylinders (40).

12. Schmelzvorrichtung nach Anspruch 11,
**dadurch gekennzeichnet, dass** die Rotationsachse (25) des Gehäuses (26) sich mit der Längsachse (25) der Schmelzvorrichtung deckt und der Kolben des Pneumatikzylinders im wesentlichen in tangentialer Richtung am im wesentlichen zylindrischen Gehäuse (26) der Aufnahmeeinheit (2) angreift.

13. Schmelzvorrichtung nach einem der vorstehenden Ansprüche,
**gekennzeichnet durch** eine Sammeleinrichtung zum Sammeln und/oder Abführen des verflüssigten Materials, wobei bevorzugt die Schmelzvorrichtung mit einer Pumpe (76) und einer Ablasseinrichtung (120) zum Ablassen des flüssigen Materials verbunden ist.

14. Schmelzvorrichtung nach einem der vorstehenden Ansprüche,
**gekennzeichnet durch** eine Arbeitskammer (76), welche einerseits **durch** das Abtrennelement (74) und andererseits **durch** die Aufnahmeeinheit (2) und einen Gehäuseabschnitt (78) definiert ist, welche im Betrieb teilweise von elektromagnetischer Strahlung durchdrungen wird und eine Auslassöffnung (82) aufweist, **durch** welche das flüssige Material abgeführt werden kann.

15. Schmelzvorrichtung nach Anspruch 14,
**dadurch gekennzeichnet, dass** die Arbeitskammer (76) gasdicht abgedichtet ist und der Kolben (60) der Vorschubeinrichtung in abdichtender Beziehung mit dem Gehäuse (26) der Aufnahmeeinheit steht.

16. Schmelzvorrichtung nach einem der vorstehenden Ansprüche,
**dadurch gekennzeichnet, dass** die Längsachse der Schmelzvorrichtung im Betrieb in Bezug auf eine Horizontale in einem Winkel von bis zu 45° schräg angeordnet ist und die Öffnung der Arbeitskammer am tiefsten Punkt angeordnet ist.

17. Verfahren zum Verflüssigen von thermoplastischem Material, insbesondere mit einer Schmelzvorrichtung nach einem der vorstehenden Ansprüche,
wobei das zu verflüssigende Material in einer Aufnahmeeinheit aufgenommen und mittels eines Heizgerätes verflüssigt wird,
und das verflüssigte Material gesammelt und abgeführt wird,
wobei eine Strahlungsquelle elektromagnetische Strahlung abgibt,
die elektromagnetische Strahlung auf das zu verflüssigende Material in der Aufnahmeeinheit einwirkt,
das Material durch Einwirken der elektromagnetischen Strahlung verflüssigt wird und das flüssige Material gesammelt und abgeführt wird,
**dadurch gekennzeichnet, dass** das zu verflüssigende Material mittels einem Vorschubeinrichtung (52) in Richtung der Strahlungsquelle (8) vorgeschoben wird, wobei das Vorschubeinrichtung (52) einen pneumatisch, hydraulisch oder motorbetrieben hin und her bewegbaren Kolben (60) oder eine vorspannbare Feder aufweist.

18. Verfahren nach Anspruch 17,
**dadurch gekennzeichnet, dass** die elektromagnetische Strahlung durch eine Vielzahl von Strahlungsquellen abgegeben wird, durch ein strahlungsdurchlässiges Abtrennelement hindurchtritt und dann auf das zu verflüssigende Material einwirkt, welches teilweise in einer Arbeitskammer angeordnet ist.

## Revendications

1. Appareil de fusion pour la liquéfaction d'une matière thermoplastique comprenant
une unité de réception (2) destinée à recevoir la matière à liquéfier,
un dispositif de chauffage (4) destiné au chauffage de la matière reçue par l'unité de réception (2) de sorte qu'elle puisse être liquéfiée,
dans lequel le dispositif de chauffage (4) présente au moins une source de rayonnement (8) qui est destinée à émettre un rayonnement électromagnétique, et agencée et configurée de sorte que le rayonnement électromagnétique puisse heurter la matière à liquéfier dans le but de la liquéfier,
**caractérisé en ce que** l'unité de réception (2) présente un dispositif de fourniture (52) pour la fourniture de la matière à liquéfier dans une direction vers la source de rayonnement (8), dans lequel le dispositif de fourniture (52) présente un piston plongeur à mouvement alternatif par voie pneumatique, hydraulique ou motorisée (60) ou un ressort précontraignable.

2. Appareil de fusion selon la revendication 1, **caractérisé en ce qu'**un élément de séparation transmettant le rayonnement (74) est disposé entre la source de rayonnement et l'unité de réception dans la trajectoire du faisceau du rayonnement électromagnétique, dans lequel la source de rayonnement (8) et/ou l'élément de séparation (74) sont disposés de sorte que le rayonnement électromagnétique émis par la source de rayonnement (8) soit rayonné directement par l'élément de séparation (74) et heurte la matière à liquéfier.

3. Appareil de fusion selon la revendication 2, **caractérisé en ce que** la source de rayonnement (8), l'élément de séparation (74) et l'unité de réception (2) sont disposés le long d'un axe longitudinal (33) de l'appareil de fusion, dans lequel en fonctionnement, l'axe longitudinal (25) n'est pas disposé verticalement.

4. Appareil de fusion selon l'une quelconque des revendications précédentes, **caractérisé en ce qu'**une pluralité de sources de rayonnement (5) est disposée dans une unité de rayonnement (6).

5. Appareil de fusion selon l'une quelconque des revendications précédentes, **caractérisé en ce que** la source ou les sources de rayonnement (8) sont adaptées pour émettre un rayonnement d'une longueur d'onde comprise entre 10⁻⁷ et 10⁻³ m.

6. Appareil de fusion selon l'une quelconque des revendications 2 à 5, **caractérisé en ce que** l' élément de séparation (74) présente la forme d'un risque.

7. Appareil de fusion selon au moins l'une quelconque des revendications précédentes, **caractérisé en ce que** l'unité de réception (2) présente un logement (26) qui, au moins sur un côté à l'opposé de la source de rayonnement (8), présente une ouverture (32), par laquelle le rayonnement électromagnétique peut pénétrer et/ou par laquelle la matière à liquéfier s'étend.

8. Appareil de fusion selon la revendication 7, **caractérisé en ce que** le logement (26) de l'unité de réception (2) présente sensiblement une paroi périphérique cylindrique ou parallélépipédique.

9. Appareil de fusion selon au moins l'une quelconque des revendications 7 ou 9, **caractérisé en ce que** le piston plongeur (60) peut être déplacé linéairement dans le logement (26) de l'unité de réception (2) et le piston plongeur (60) peut être entraîné à l'aide d'une tige (58) et d'un vérin pneumatique (54).

10. Appareil de fusion selon au moins l'une quelconque des revendications 7 à 9, **caractérisé en ce que** l'unité de réception (2) est adaptée de sorte que la matière reçue à liquéfier puisse tourner.

11. Appareil de fusion selon la revendication 10, **caractérisé en ce que** le logement (26) de l'unité de réception (2) est maintenu de manière à pouvoir tourner et peut être tourné à l'aide d'un dispositif d'entraînement (36), en particulier à l'aide d'un vérin pneumatique (40).

12. Appareil de fusion selon la revendication 11, **caractérisé en ce que** l'axe de rotation (25) du logement (26) coïncide avec l'axe longitudinal (25) de l'appareil de fusion et le piston plongeur du vérin pneumatique engage sensiblement dans la direction tangentielle le logement sensiblement cylindrique (26) de l'unité de réception (2).

13. Appareil de fusion selon au moins l'une quelconque des revendications précédentes, **caractérisé par** un dispositif de collecte pour la collecte et/ou l'évacuation de la matière liquéfiée, dans lequel l'appareil de fusion est de préférence relié à une pompe (76) et à un dispositif de drainage (120) pour le drainage de la matière liquide.

14. Appareil de fusion selon au moins l'une quelconque des revendications précédentes, **caractérisé par** une chambre de travail (76) qui est définie d'une part par l'élément de séparation (74) et d'autre part par l'unité de réception (2), et une partie de logement (78), et qui, en fonctionnement, présente en partie un rayonnement électromagnétique passant au travers de celle-ci et présente une ouverture de sortie (82), par laquelle la matière liquéfiée peut être évacuée.

15. Appareil de fusion selon la revendication 14, **caractérisé en ce que** la chambre de tramail (76) est de nature étanche au gaz et le piston plongeur (60) du dispositif de fourniture est étanché dans le logement (26) de l'unité de réception.

16. Appareil de fusion selon l'une quelconque des revendications précédentes, **caractérisé en ce que** l'axe longitudinal de l'appareil de fusion est disposé, en fonctionnement, de manière inclinée à un angle de 45° maximum par rapport à une horizontale et l'ouverture de la chambre de travail est disposée sur le point le plus bas.

17. Procédé pour liquéfier de la matière thermoplastique en particulier en utilisant un appareil de fusion selon au moins l'une quelconque des revendications précédentes,
dans lequel la matière à liquéfier qui est reçue dans une unité de réception est liquéfiée à l'aide d'un dispositif de chauffage,
et la matière liquéfiée est collectée et/ou évacuée,
dans lequel
une source de rayonnement émet un rayonnement électromagnétique,
le rayonnement électromagnétique heurte la matière à liquéfier dans l'unité de réception,
la matière est liquéfiée par le rayonnement électromagnétique incident, et
la matière liquide est collectée et/ou évacuée,
**caractérisé en ce que** la matière à liquéfier est fournie à l'aide d'un dispositif de fourniture (52) dans une direction vers la source de rayonnement (8), dans lequel le dispositif de fourniture (52) présente un piston plongeur à mouvement alternatif par voie pneumatique, hydraulique ou motorisée (60) ou un ressort précontraignable.

18. Procédé selon la revendication 17, **caractérisé en ce que** le rayonnement électromagnétique est émis par une pluralité de sources de rayonnement, passe par un élément de séparation transmettant un rayonnement puis heurte la matière à liquéfier qui est au moins en partie disposée dans une chambre de travail.
